# FASCICULE DE BREVET EUROPEEN

(11) **EP 2 731 415 B1**
(45) Date de publication et mention de la délivrance du brevet: **14.10.2015**
(21) Numéro de dépôt: 12744066.7
(22) Date de dépôt: 09.07.2012
(51) Int. Cl.: A01D 89/00

(54) **Dispositif de ramassage muni de paliers perfectionnés et machine agricole equipée d'un tel dispositif**
Aufnehmervorrichtung mit verbesserten Lagern und landwirtschaftliche Maschine mit einer solchen Vorrichtung
Pick-up device provided with improved bearings and agricultural machine comprising such a device

(30) Priorité: 13.07.2011 FR 1156369
(43) Date de publication de la demande: 21.05.2014
(73) Titulaire: KUHN S.A., 67700 Saverne (FR)
(72) Inventeur: GANTZER, Christian, F-57915 Woustwiller (FR); PETAIN, Jean-Pierre, F-67310 Westhoffen (FR)
(86) Numéro de dépôt international: PCT/FR2012/051616
(87) Numéro de publication internationale: WO 2013/007940

(56) Documents cités:
- EP-A1- 1 350 423
- DE-A1- 3 207 755
- US-A- 5 007 235
- US-A1- 2008 236 128

## Description

La présente invention se rapporte à un dispositif de ramassage comportant des outils de râtelage et de prélèvement au sol de produits et qui est destiné à être monté sur une machine agricole. Le dispositif de ramassage comprend une partie tournante munie d'au moins un bras support, les outils de râtelage et de prélèvement étant attachés audit au moins un bras support, ledit au moins un bras support pouvant pivoter autour d'un axe de rotation par rapport à la partie tournante au moyen d'au moins un premier palier et un deuxième palier, lesdits au moins premier et deuxième paliers comprenant chacun une bague extérieure solidaire de la partie tournante et par rapport à laquelle bague extérieure le bras support peut pivoter autour de l'axe de rotation.

Un tel dispositif de ramassage du type mentionné dans le préambule, est connu puisqu'il équipe la machine proposée à la vente par la société KUHN sous l'appellation « MERGE-MAXX » (marque déposée) dans sa variante dénommée « 900 ». Cette machine est destinée au ramassage de végétaux fauchés présents au sol et à la mise en un ou plusieurs andains des végétaux ramassés. Sur cette machine, le dispositif de ramassage comporte des outils de râtelage et de prélèvement réalisés sous la forme de fourches. Le dispositif de ramassage comprend également une partie tournante qui se matérialise par un cylindre muni d'au moins deux flasques. Les flasques sont assimilables à des anneaux concentriques au cylindre et qui sont soudés au cylindre à une certaine distance l'un de l'autre suivant l'axe du cylindre. La partie tournante comporte plusieurs bras support auxquels sont attachés des supports de fourches. Les fourches sont vissées aux supports de fourches. Chaque bras support est relié à la partie tournante au moyen d'au moins deux paliers et chaque palier est porté par un flasque. De plus, chaque bras support est muni à une extrémité d'une came portant un galet, lequel roule dans une piste de came. Ainsi, chaque bras support peut pivoter autour d'un axe de rotation qui est sensiblement parallèle à l'axe de rotation de la partie tournante, et son pivotement est commandé par ladite came. Dans un souci de clarté, on attribue à chaque flasque une face dite interne ainsi qu'une face dite externe, définies comme suit. Les faces internes de deux flasques consécutifs sont les deux faces annulaires qui sont orientées l'une vers l'autre. La face externe est la face annulaire située de l'autre côté de la face interne du flasque correspondant. Chaque palier se compose d'une bague extérieure et d'une entretoise. La bague extérieure comporte un alésage dans lequel le bras support peut pivoter. L'entretoise est formée par un cylindre creux dans lequel le bras support peut pivoter. Chaque bague extérieure est fixée sur la face interne du flasque correspondant et s'étend en direction de la face interne du flasque opposé. Chaque entretoise s'étend entre la face externe du flasque correspondant et le support de fourches le plus proche de ladite face externe. Ainsi, une entretoise limite, voire empêche, le déplacement du bras support dans un sens parallèle à l'axe de rotation, tandis que l'autre entretoise limite, voire empêche, le déplacement dans le sens opposé. L'association des deux entretoises limite, voire empêche, le déplacement du bras support parallèlement à l'axe de rotation.

Un inconvénient du dispositif de ramassage précédemment décrit est qu'il requiert une fabrication précise de ses différents composants afin, d'une part que les flasques, entretoises et supports de fourches puissent être montés comme décrit précédemment, d'autre part que l'absence de déplacement du bras support parallèlement à l'axe de rotation soit atteinte. Cette exigence augmente le coût de revient de la machine. Ainsi, si l'entretoise est trop longue, elle ne pourra pas être montée entre le flasque et le support de fourches. Si en revanche l'entretoise est trop courte, il subsistera un jeu entre le flasque et le support de fourches et donc le bras support pourra se déplacer parallèlement à l'axe de rotation. De même, si le support de fourches est fabriqué en dehors des tolérances prévues ou bien s'il est attaché au mauvais endroit sur le bras support, il empêchera le montage de l'entretoise voisine ou bien il subsistera un jeu de fonctionnement. Enfin, le montage du bras support au moyen des deux paliers est hyperstatique puisqu'un palier doit empêcher le déplacement parallèlement à l'axe de rotation dans un sens et l'autre palier dans l'autre sens.

Un autre dispositif de ramassage du type mentionné dans le préambule, est connu du document US 2008/0236128 A1. Sur ce dispositif de ramassage, le bras support est guidé par rapport à la partie tournante suivant une direction parallèle à l'axe de rotation du bras support. Cependant, la qualité de ce guidage axial est fortement tributaire des tolérances de fabrication du bras support et de la partie tournante.

La présente invention a pour but de proposer un dispositif de ramassage qui ne présente pas les inconvénients précités.

A cet effet, une importante caractéristique de l'invention réside dans le fait qu'au moins le premier palier comprend une bague intérieure, que la bague intérieure peut pivoter par rapport à la bague extérieure autour de l'axe de rotation, que la bague intérieure est solidaire du bras support, qu'un moyen d'arrêt relie la bague intérieure à la bague extérieure, et que le moyen d'arrêt limite le déplacement du bras support par rapport à la partie tournante, dans une direction sensiblement parallèle à l'axe de rotation, à une valeur faible ou nulle.

C'est la forme de la bague intérieure qui s'adapte à la géométrie du moyen d'arrêt, et non celle du bras support. Ce dernier peut donc avantageusement être choisi parmi une gamme de profilés standard dont le coût est modéré. En sus, la bague intérieure, en tant que composant de petite taille, peut facilement avoir une forme plus ou moins complexe imposée par le moyen d'arrêt, et peut aisément être traitée thermiquement. Tel que réalisé, le moyen d'arrêt limite le déplacement du bras support parallèlement à l'axe de rotation, dans un sens comme dans l'autre. Les autres paliers peuvent avantageusement ne pas être munis du moyen d'arrêt. Le montage du bras support est donc isostatique.

D'autres caractéristiques et avantages de l'invention ressortiront de la description ci-après avec référence aux dessins annexés qui représentent, à titre d'exemple non limitatif, plusieurs formes de réalisation du dispositif de ramassage selon l'invention.

Sur ces dessins :
- la figure 1 représente une vue de dessus d'une machine agricole attelée à un tracteur et comportant plusieurs dispositifs de ramassage selon l'invention ;
- la figure 2 représente une vue en perspective d'un dispositif de ramassage selon l'invention, suivant une forme de réalisation ;
- la figure 3 représente une vue partielle d'un dispositif de ramassage selon l'invention, suivant la forme de réalisation de la figure 2 ;
- la figure 4 représente une vue partielle du dispositif de ramassage de la figure 3, suivant la coupe IV-IV de la figure 3 ;
- la figure 5 représente une vue en coupe du premier palier selon un exemple de réalisation, suivant la coupe V-V de la figure 4 ;
- la figure 6 représente une vue en coupe du deuxième palier selon un autre exemple de réalisation, suivant la coupe VI-VI de la figure 4 ;
- la figure 7 représente une vue en coupe du premier palier selon une première variante de réalisation, suivant la coupe VII-VII de la figure 3 ;
- la figure 8 représente une vue en coupe du premier palier selon une deuxième variante de réalisation, suivant la coupe VIII-VIII de la figure 3 ;
- la figure 9 représente une vue en coupe du premier palier selon une troisième variante de réalisation, suivant la coupe IX-IX de la figure 3 ;
- la figure 10 représente une vue en coupe du premier palier selon une quatrième variante de réalisation, suivant la coupe X-X de la figure 3 ;
- la figure 11 représente une vue en coupe du premier palier selon une cinquième variante de réalisation, suivant la coupe XI-XI de la figure 4 ;
- la figure 12 représente une vue en coupe du premier palier selon une sixième variante de réalisation, suivant la coupe XII-XII de la figure 3 ;
- la figure 13 représente une vue en coupe du premier palier selon une septième variante de réalisation, suivant la coupe XIII-XIII de la figure 4.

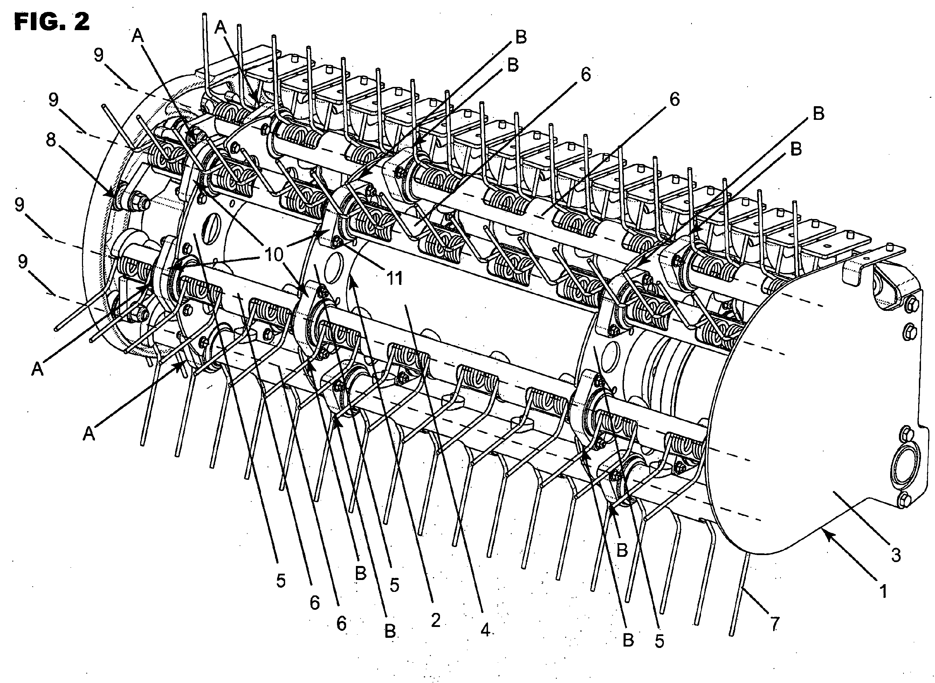

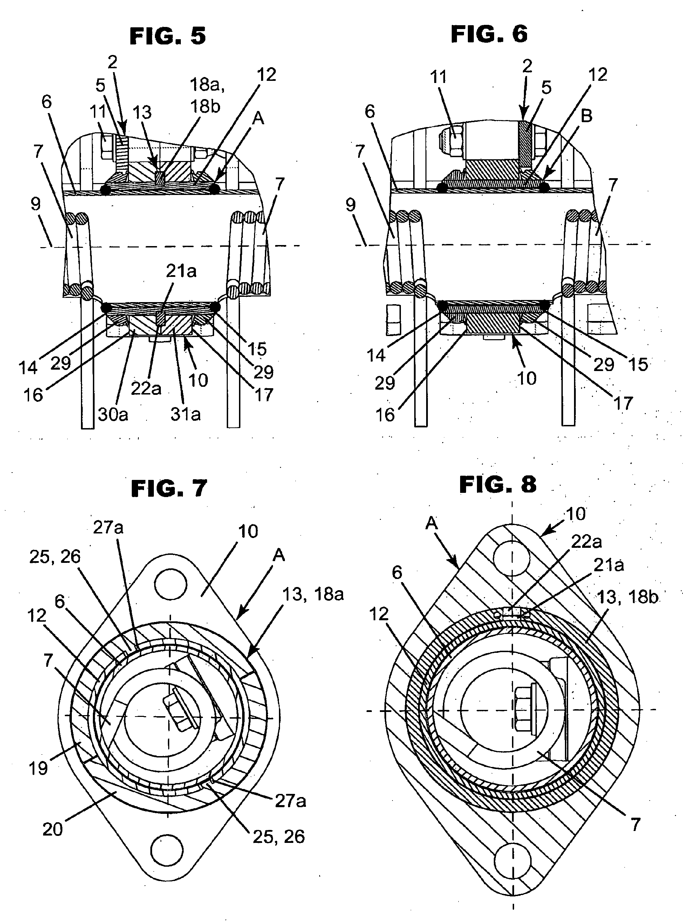

Ainsi qu'il ressort de la figure 2, le dispositif de ramassage (1) selon l'invention comporte une partie tournante (2) et un bâti (3). Ladite partie tournante (2) est formée par un cylindre (4) qui est en liaison de pivotement avec ledit bâti (3). Audit cylindre (4) sont attachés plusieurs flasques (5). Lesdits flasques (5) sont soudés audit cylindre (4) à une certaine distance l'un de l'autre suivant l'axe dudit cylindre (4). Lesdits flasques (5) sont, au voisinage de leur périphérie, munis d'ouvertures de manière à être traversés par des bras supports (6). Lesdits bras supports (6) sont formés à partir de tubes creux et portent plusieurs fourches (7). Ces dernières sont, dans la forme de réalisation de la figure 2, commandées par un dispositif à came (8). Ledit dispositif à came (8) se compose d'une came solidaire dudit bras support (6), d'un galet en liaison de pivotement avec une extrémité de ladite came, ainsi que d'une piste de came solidaire dudit bâti (3) et dans laquelle ledit galet peut rouler. Chacun desdits bras supports (6) peut pivoter autour d'un axe de rotation (9) par rapport à ladite partie tournante (2) au moyen d'au moins un premier palier (A), représenté notamment sur la figure 5, et d'un deuxième palier (B) détaillé à la figure 6. Dans la forme de réalisation de la figure 2, chaque bras support (6) est porté par un palier (A) et deux paliers (B). Lesdits paliers (A) et (B) comportent chacun une bague extérieure (10) solidaire dudit flasque (5) correspondant au moyen de boulons (11) qui sont visibles sur la figure 2. Ladite bague extérieure (10) est traversée par ledit bras support (6) de sorte que ce dernier puisse pivoter par rapport à ladite bague extérieure (10) autour dudit axe de rotation (9).

Au moins ledit palier (A) comprend une bague intérieure (12) dont le diamètre extérieur est sensiblement ajusté au diamètre intérieur de ladite bague extérieure (10) correspondante, de sorte que ladite bague intérieure (12) puisse pivoter par rapport à ladite bague extérieure (10) autour dudit axe de rotation (9). Ladite bague intérieure (12) est solidaire dudit bras support (6) par exemple par soudure. Ladite bague intérieure (12) est conçue pour accueillir un moyen d'arrêt (13). C'est donc la forme de ladite bague intérieure (12) qui s'adapte à la géométrie dudit moyen d'arrêt (13), et non celle dudit bras support (6). Ledit bras support (6) étant de type barre, il peut donc avantageusement être choisi parmi une gamme de profilés standard dont le coût est modéré. Il est également plus aisé de réaliser une forme complexe sur un petit composant tel que ladite bague intérieure (12), que sur un élément de grande longueur comme ledit bras support (6). En sus, ladite bague intérieure (12) est avantageusement traitée thermiquement afin d'être résistante à l'usure. La présence de ladite bague intérieure (12) dispense de traiter thermiquement ledit bras support (6), soit dans sa totalité, soit au voisinage de ladite bague extérieure (10). De plus, le traitement thermique est plus commode sur un petit composant tel que ladite bague intérieure (12), que sur un élément de grande longueur comme ledit bras support (6). Ledit moyen d'arrêt (13) relie ladite bague intérieure (12) à ladite bague extérieure (10) et limite le déplacement dudit bras support (6) par rapport à ladite partie tournante (2), dans une direction sensiblement parallèle audit axe de rotation (9), à une valeur faible ou nulle. Ledit moyen d'arrêt (13) est de préférence associé au seul dit palier (A) tandis que lesdits paliers (B) sont dispensés dudit moyen d'arrêt (13), ce qui rend le montage dudit bras support (6) isostatique. Dans ce cas, la maîtrise du jeu de fonctionnement dans une direction parallèle audit axe de rotation (9) requiert d'adapter les seules géométries de ladite bague extérieure (10) et de ladite bague intérieure (12) dudit palier (A) ainsi que celle dudit moyen d'arrêt (13) associé.

Avantageusement, ladite bague intérieure (12) s'étend entre deux faces (14, 15) tandis que ladite bague extérieure s'étend entre deux faces (16, 17). De préférence, suivant une direction sensiblement parallèle audit axe de rotation (9), ledit moyen d'arrêt (13) est disposé entre les deux plus proches faces parmi lesdites faces (14, 15, 16, 17). Ceci signifie que dans l'exemple de réalisation de la figure 5, où ladite bague intérieure (12) est plus large que ladite bague extérieure (10), ledit moyen d'arrêt (13) est situé entre lesdites faces (16, 17) de ladite bague extérieure (10).

Suivant la première variante de réalisation de la figure 7, ledit moyen d'arrêt (13) est de préférence formé par un segment (18a) en deux parties comportant deux parties (19, 20). Chacune desdites parties (19, 20) s'engage d'une part dans une gorge (21a) formée dans ladite bague intérieure (12) et d'autre part dans une gorge (22a) formée dans ladite bague extérieure (10).

La deuxième variante de réalisation, illustrée par la figure 8, se distingue de la première en ce que ledit moyen d'arrêt (13) est formé par un segment ouvert (18b).

Les deux variantes de réalisation susvisées permettent, après démontage de ladite bague extérieure (10), de retirer aisément ledit segment (18a, 18b) de ladite gorge (21a) formée dans ladite bague intérieure (12). En sus, ledit segment (18a, 18b), du fait de sa forme sensiblement annulaire, est capable de supporter des efforts axiaux importants.

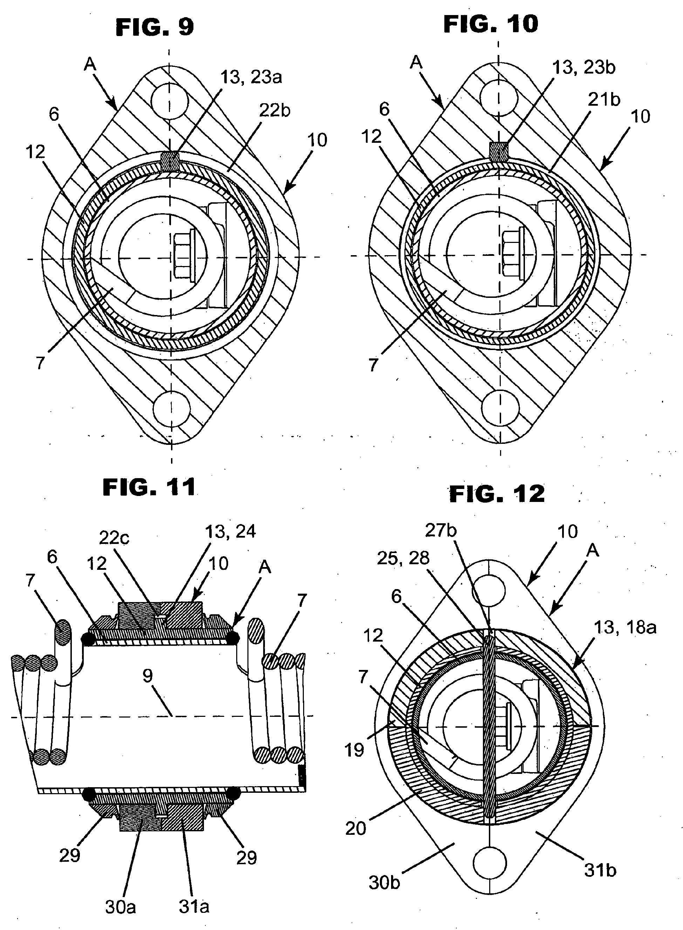

Suivant la troisième variante de réalisation représentée à la figure 9, ledit moyen d'arrêt (13) est formé par un pion (23a) solidaire de ladite bague intérieure (12), lequel pion (23a) s'engage dans une gorge (22b) formée dans ladite bague extérieure (10).

Suivant la quatrième variante de réalisation illustrée par la figure 10, ledit moyen d'arrêt (13) est formé par un pion (23b) solidaire de ladite bague extérieure (10), lequel pion (23b) s'engage dans une gorge (21b) formée dans ladite bague intérieure (12).

Ainsi qu'il ressort de la figure 11, une cinquième variante de réalisation prévoit que ledit moyen d'arrêt (13) est formé par un épaulement (24) sur ladite bague intérieure (12), lequel épaulement (24) s'engage dans une gorge (22c) formée dans ladite bague extérieure (10).

Préférentiellement, ledit segment (18a, 18b) comporte un moyen d'immobilisation en rotation (25). Ledit moyen d'immobilisation en rotation (25) limite le jeu de pivotement dudit segment (18a, 18b) autour d'un axe sensiblement parallèle audit axe de rotation (9) à une valeur faible ou nulle. Cette caractéristique évite une usure prématurée dudit segment (18a, 18b) par frottement contre lesdites gorges (21a, 22a).

Ledit moyen d'immobilisation en rotation (25) peut avantageusement être formé par un téton (26) solidaire dudit segment (18a, 18b) et qui s'engage dans un trou (27a) pratiqué dans ladite bague intérieure (12). Cette caractéristique apparaît à la figure 7.

Une sixième variante de réalisation représentée à la figure 12 prévoit que ledit moyen d'immobilisation en rotation (25) est formé par une goupille (28) qui traverse ledit segment (18a, 18b) et qui s'engage dans un trou (27b) pratiqué dans ladite bague intérieure (12).

Conformément à la figure 6, il est de préférence prévu qu'au moins ledit deuxième palier (B) comprend une bague intérieure (12), laquelle peut pivoter par rapport à ladite bague extérieure (10) autour dudit axe de rotation (9) et est solidaire dudit bras support (6). Dans la forme de réalisation illustrée par la figure 2, tous les paliers (B) comportent ladite bague intérieure (12). Cette dernière peut avantageusement être traitée thermiquement afin d'être résistante à l'usure.

En sus, ladite bague intérieure (12) peut, dans une direction sensiblement parallèle audit axe de rotation (9), se déplacer librement dans ladite bague extérieure (10). Cette caractéristique ressort sans équivoque de la figure 6.

Avantageusement, au moins un desdits au moins premier palier (A) et deuxième palier (B) comporte deux joints d'étanchéité (29) et chacun desdits deux joints d'étanchéité (29) s'appuie contre ladite bague extérieure (10) dudit au moins premier palier (A) ou deuxième palier (B). Lesdits deux joints d'étanchéité (29) sont visibles notamment sur les figures 5 et 6. Chacun desdits deux joints d'étanchéité (29) peut s'appuyer soit contre ladite bague intérieure (12), soit contre ledit bras support (6). Ceci évite la pénétration d'impuretés dans le palier (A, B) correspondant et augmente sa durée de vie. En sus, dans le cas d'un palier (A, B) lubrifié, lesdits deux joints d'étanchéité (29) limitent les pertes de lubrifiant.

Préférentiellement, chacun desdits deux joints d'étanchéité (29) s'appuie contre ladite bague intérieure (12) dudit au moins premier palier (A) ou deuxième palier (B). Cette caractéristique est illustrée par les figures 5 et 6.

Préférentiellement, ainsi qu'il ressort de la figure 5, ladite bague extérieure (10) d'au moins un desdits au moins premier palier (A) et deuxième palier (B) comporte deux parties (30a, 31a) qui se rejoignent sensiblement dans un plan perpendiculaire audit axe de rotation (9). Cette caractéristique est particulièrement avantageuse lorsque le palier (A, B) correspondant est muni dudit moyen d'arrêt (13). En effet, elle assure un démontage / remontage rapide de ladite bague extérieure (10).

Alternativement, le même bénéfice peut être obtenu par le fait que ladite bague extérieure (10) d'au moins un desdits au moins premier palier (A) et deuxième palier (B) comporte deux parties (30b, 31b) qui se rejoignent sensiblement dans un plan parallèle audit axe de rotation (9). Cette caractéristique apparaît à la figure 12.

Préférentiellement, ladite bague extérieure (10), d'au moins un desdits au moins premier palier (A) et deuxième palier (B) est réalisée en matériau auto-lubrifiant. Il peut s'agir notamment de plastique PA6 lubrifié. Le faible coefficient de frottement intrinsèque au PA6 est encore diminué par le fait qu'il soit lubrifié. Cette caractéristique dispense avantageusement l'utilisateur d'opérations fastidieuses de graissage. De plus, ledit matériau auto-lubrifiant s'use lentement, ce qui prolonge la durée de vie dudit dispositif de ramassage (1) et réduit la fréquence de remplacement de ladite bague extérieure (10).

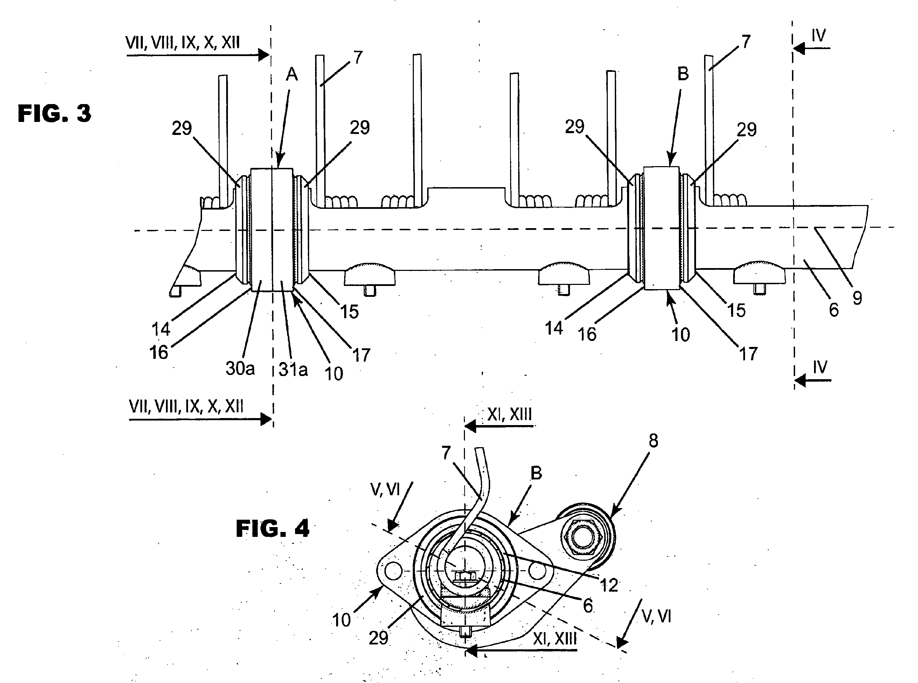

Ladite bague intérieure (12) d'au moins un desdits au moins premier palier (A) et deuxième palier (B) peut être une pièce rapportée sur ledit bras support (6). Cette caractéristique est visible sur les figures 2 à 12. Ledit bras support (6) étant de type barre, il peut donc avantageusement être choisi parmi une gamme de profilés standard dont le coût est modéré. Il est également plus aisé de réaliser une forme complexe sur un petit composant tel que ladite bague intérieure (12), que sur un élément de grande longueur comme ledit bras support (6). En sus, ladite bague intérieure (12) est avantageusement traitée thermiquement afin d'être résistante à l'usure. La présence de ladite bague intérieure (12) dispense de traiter thermiquement ledit bras support (6), soit dans sa totalité, soit au voisinage de ladite bague extérieure (10). De plus, le traitement thermique est plus commode sur un petit composant tel que ladite bague intérieure (12), que sur un élément de grande longueur comme ledit bras support (6). Ladite bague intérieure (12) peut être rapportée sur ledit bras support (6) par soudure.

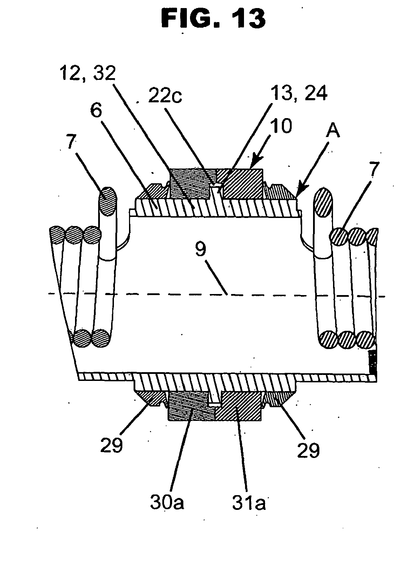

Néanmoins, selon une septième variante de réalisation illustrée par la figure 13, il reste envisageable que ladite bague intérieure (12) d'au moins un desdits au moins premier palier (A) et deuxième palier (B) soit formée par un épaulement (32) sur ledit bras support (6). Cette caractéristique évite d'avoir à solidariser ladite bague intérieure (12) audit bras support (6) par une opération supplémentaire, par exemple de soudure.

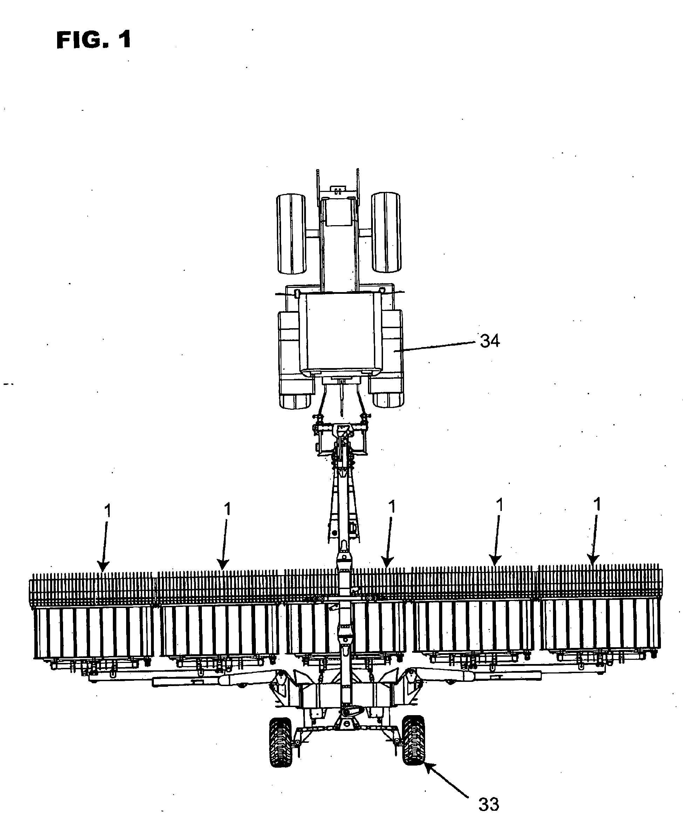

Ledit dispositif de ramassage (1) selon l'invention est destiné à être monté sur une machine agricole (33), soit seul, soit en combinaison avec d'autres dispositifs de ramassage qui peuvent être ou non conformes à l'invention. Une des machine agricoles visées est celle destinée à la mise en andain de produits étendus au sol et en particulier celle du type connu sous l'appellation de « Merger ». Une telle machine agricole (33) est illustrée par la figure 1. Elle est conçue pour être attelée à un tracteur (34) et comprend au moins un pick-up qui ramasse les végétaux ainsi qu'au moins un dispositif de déplacement latéral des végétaux ramassés. Le pick-up peut avantageusement être formé par un dispositif de ramassage (1) selon l'invention. Ce dernier peut également équiper toute autre machine de récolte telle qu'une presse, une auto-chargeuse ou une ensileuse.

Il est bien évident que l'invention n'est pas limitée aux formes de réalisation décrites ci-dessus et représentées sur les figures annexées. Des modifications restent possibles, notamment en ce qui concerne la constitution ou le nombre des divers éléments ou par substitution d'équivalents techniques, sans pour autant sortir du domaine de protection des revendications annexées.

## Revendications

1. Dispositif de ramassage comportant des outils de râtelage et de prélèvement au sol de produits et qui est destiné à être monté sur une machine agricole (33), ledit dispositif de ramassage (1) comprenant une partie tournante (2) munie d'au moins un bras support (6), lesdits outils de râtelage et de prélèvement étant attachés audit au moins un bras support (6), ledit au moins un bras support (6) pouvant pivoter autour d'un axe de rotation (9) par rapport à ladite partie tournante (2) au moyen d'au moins un premier palier (A) et un deuxième palier (B), lesdits au moins premier et deuxième paliers (A et B) comprenant chacun une bague extérieure (10) solidaire de ladite partie tournante (2) et par rapport à laquelle bague extérieure (10) ledit bras support (6) peut pivoter autour dudit axe de rotation (9), ***caractérisé en ce qu'**au* moins ledit premier palier (A) comprend une bague intérieure (12), que ladite bague intérieure (12) peut pivoter par rapport à ladite bague extérieure (10) autour dudit axe de rotation (9), que ladite bague intérieure (12) est solidaire dudit bras support (6), qu'un moyen d'arrêt (13) relie ladite bague intérieure (12) à ladite bague extérieure (10), et que ledit moyen d'arrêt (13) limite le déplacement dudit bras support (6) par rapport à ladite partie tournante (2), dans une direction sensiblement parallèle audit axe de rotation (9), à une valeur faible ou nulle.

2. Dispositif de ramassage suivant la revendication 1, ***caractérisé en ce que*** ladite bague intérieure s'étend entre deux faces (14, 15), que ladite bague extérieure s'étend entre deux faces (16, 17) et que dans une direction sensiblement parallèle audit axe de rotation (9), ledit moyen d'arrêt (13) est disposé entre les deux plus proches faces parmi lesdites faces (14, 15, 16, 17).

3. Dispositif de ramassage suivant la revendication 1 ou 2, ***caractérisé en ce que*** ledit moyen d'arrêt (13) est formé par un segment (18a) en deux parties qui comporte deux parties (19, 20) et que chacune desdites parties (19, 20) s'engage d'une part dans une gorge (21a) formée dans ladite bague intérieure (12) et d'autre part dans une gorge (22a) formée dans ladite bague extérieure (10).

4. Dispositif de ramassage suivant la revendication 1 ou 2, ***caractérisé en ce que*** ledit moyen d'arrêt (13) est formé par un segment ouvert (18b) et que ledit segment ouvert (18b) s'engage d'une part dans une gorge (21a) formée dans ladite bague intérieure (12) et d'autre part dans une gorge (22a) formée dans ladite bague extérieure (10).

5. Dispositif de ramassage suivant la revendication 1 ou 2, ***caractérisé en ce que*** ledit moyen d'arrêt (13) est formé par un pion (23a) solidaire de ladite bague intérieure (12) et que ledit pion (23a) s'engage dans une gorge (22b) formée dans ladite bague extérieure (10).

6. Dispositif de ramassage suivant la revendication 1 ou 2, ***caractérisé en ce que*** ledit moyen d'arrêt (13) est formé par un pion (23b) solidaire de ladite bague extérieure (10) et que ledit pion (23b) s'engage dans une gorge (21b) formée dans ladite bague intérieure (12).

7. Dispositif de ramassage suivant la revendication 1 ou 2, ***caractérisé en ce que*** ledit moyen d'arrêt (13) est formé par un épaulement (24) sur ladite bague intérieure (12) et que ledit épaulement (24) s'engage dans une gorge (22c) formée dans ladite bague extérieure (10).

8. Dispositif de ramassage suivant la revendication 3 ou 4, ***caractérisé en ce que*** ledit segment (18a, 18b) comporte un moyen d'immobilisation en rotation (25) et que ledit moyen d'immobilisation en rotation (25) limite le jeu de pivotement dudit segment (18a, 18b) autour d'un axe sensiblement parallèle audit axe de rotation (9) à une valeur faible ou nulle.

9. Dispositif de ramassage suivant la revendication 8, ***caractérisé en ce que*** ledit moyen d'immobilisation en rotation (25) est formé par un téton (26) solidaire dudit segment (18a, 18b) et qui s'engage dans un trou (27a) pratiqué dans ladite bague intérieure (12).

10. Dispositif de ramassage suivant la revendication 8, ***caractérisé en ce que*** ledit moyen d'immobilisation en rotation (25) est formé par une goupille (28) qui traverse ledit segment (18a, 18b) et qui s'engage dans un trou (27b) pratiqué dans ladite bague intérieure (12).

11. Dispositif de ramassage suivant l'une quelconque des revendications 1 à 10, ***caractérisé en ce qu'***au moins ledit deuxième palier (B) comprend une bague intérieure (12), que ladite bague intérieure (12) peut pivoter par rapport à ladite bague extérieure (10) autour dudit axe de rotation (9) et que ladite bague intérieure (12) est solidaire dudit bras support (6).

12. Dispositif de ramassage suivant la revendication 11, ***caractérisé en ce que*** ladite bague intérieure (12) peut, dans une direction sensiblement parallèle audit axe de rotation (9), se déplacer librement dans ladite bague extérieure (10).

13. Dispositif de ramassage suivant l'une quelconque des revendications 1 à 12, *caractérisé en ce qu*'au moins un desdits au moins premier palier (A) et deuxième palier (B) comporte deux joints d'étanchéité (29) et que chacun desdits deux joints d'étanchéité (29) s'appuie contre ladite bague extérieure (10) dudit au moins premier palier (A) ou deuxième palier (B).

14. Dispositif de ramassage suivant la revendication 13, ***caractérisé en ce que*** chacun desdits deux joints d'étanchéité (29) s'appuie contre ladite bague intérieure (12) dudit au moins premier palier (A) ou deuxième palier (B).

15. Dispositif de ramassage suivant l'une quelconque des revendications 1 à 14, ***caractérisé en ce que*** ladite bague extérieure (10) d'au moins un desdits au moins premier palier (A) et deuxième palier (B) comporte deux parties (30a, 31a) qui se rejoignent sensiblement dans un plan perpendiculaire audit axe de rotation (9).

16. Dispositif de ramassage suivant l'une quelconque des revendications 1 à 14, ***caractérisé en ce que*** ladite bague extérieure (10) d'au moins un desdits au moins premier palier (A) et deuxième palier (B) comporte deux parties (30b, 31b) qui se rejoignent sensiblement dans un plan parallèle audit axe de rotation (9).

17. Dispositif de ramassage suivant l'une quelconque des revendications 1 à 16, ***caractérisé en ce que*** ladite bague extérieure (10) d'au moins un desdits au moins premier palier (A) et deuxième palier (B) est réalisée en matériau auto-lubrifiant.

18. Dispositif de ramassage suivant l'une quelconque des revendications 1 à 17, ***caractérisé en ce que*** ladite bague intérieure (12) d'au moins un desdits au moins premier palier (A) et deuxième palier (B) est une pièce rapportée sur ledit bras support (6).

19. Dispositif de ramassage suivant l'une quelconque des revendications 1 à 18, ***caractérisé en ce que*** ladite bague intérieure (12) d'au moins un desdits au moins premier palier (A) et deuxième palier (B) est formée par un épaulement (32) sur ledit bras support (6).

20. Machine agricole, ***caractérisée en ce* qu'**elle comporte au moins un dispositif de ramassage suivant l'une quelconque des revendications 1 à 19.

## Patentansprüche

1. Sammelvorrichtung, die Rechen- und Entnahmewerkzeuge für auf dem Boden liegenden Produkte aufweist und die zur Montage auf einer landwirtschaftlichen Maschine (33) bestimmt ist, wobei die Sammelvorrichtung (1) ein mit mindestens einem Stützarm (6) ausgestattetes Drehteil (2) umfasst, wobei die Rechen- und Entnahmewerkzeuge an dem mindestens einen Stützarm (6) befestigt sind, wobei der mindestens eine Stützarm (6) um eine Drehachse (9) im Verhältnis zum Drehteil (2) mittels mindestens eines ersten Lagers (A) und eines zweiten Lagers (B) schwenken kann, wobei das mindestens erste und zweite Lager (A und B) jeweils einen mit dem Drehteil (2) fest verbundenen Außenring (10) umfasst und der Stützarm (6) im Verhältnis zu diesem Außenring (10) um die Drehachse (9) schwenken kann, ***dadurch gekennzeichnet,* dass** mindestens das erste Lager (A) einen Innenring (12) umfasst, dass der Innenring (12) im Verhältnis zum Außenring (10) um die Drehachse (9) schwenken kann, dass der Innenring (12) mit dem Stützarm (6) fest verbunden ist, dass ein Sperrmittel (13) den Innenring (12) mit dem Außenring (10) verbindet und dass das Sperrmittel (13) die Verlagerung des Stützarm (6) im Verhältnis zum Drehteil (2) in einer zur Drehachse (9) im Wesentlichen parallelen Richtung auf einen geringen oder Nullwert begrenzt.

2. Sammelvorrichtung nach Anspruch 1, ***dadurch gekennzeichnet,* dass** sich der Innenring zwischen zwei Seiten (14, 15) erstreckt, dass sich der Außenring zwischen zwei Seiten (16, 17) erstreckt und dass das Sperrmittel (13) in einer zur Drehachse (9) im Wesentlichen parallelen Richtung zwischen den zwei nächsten Seiten der Seiten (14, 15, 16, 17) angeordnet ist.

3. Sammelvorrichtung nach Anspruch 1 oder 2, ***dadurch gekennzeichnet,* dass** das Sperrmittel (13) von einem zweiteiligen Abschnitt (18a) gebildet ist, der zwei Teile (19, 20) aufweist und dass jeder der Teile (19, 20) einerseits in eine im Innenring (12) gebildete Rille (21a) und andererseits in eine im Außenring (10) gebildete Rille (22a) eingreift.

4. Sammelvorrichtung nach Anspruch 1 oder 2, ***dadurch gekennzeichnet*, dass** das Sperrmittel (13) von einem offenen Abschnitt (18b) gebildet ist und dass der offene Abschnitt (18b) einerseits in eine im Innenring (12) gebildete Rille (21a) und andererseits in eine im Außenring (10) gebildete Rille (22a) eingreift.

5. Sammelvorrichtung nach Anspruch 1 oder 2, ***dadurch gekennzeichnet*, dass** das Sperrmittel (13) von einem mit dem Innenring (12) fest verbundenen Zapfen (23a) gebildet ist und dass der Zapfen (23a) in eine im Außenring (10) gebildete Rille (22b) eingreift.

6. Sammelvorrichtung nach Anspruch 1 oder 2, ***dadurch gekennzeichnet*, dass** das Sperrmittel (13) von einem mit dem Außenring (10) fest verbundenen Zapfen (23b) gebildet ist und dass der Zapfen (23b) in eine im Innenring (12) gebildete Rille (21 b) eingreift.

7. Sammelvorrichtung nach Anspruch 1 oder 2, ***dadurch gekennzeichnet*, dass** das Sperrmittel (13) von einem Absatz (24) auf dem Innenring (12) gebildet ist und dass der Absatz (24) in eine im Außenring (10) gebildete Rille (22c) eingreift.

8. Sammelvorrichtung nach Anspruch 3 oder 4, ***dadurch gekennzeichnet*, dass** der Abschnitt (18a, 18b) ein Ruhigstellungsmittel (25) aufweist und dass das Ruhigstellungsmittel (25) das Schwenkspiel des Abschnitts (18a, 18b) um eine zur Drehachse (9) im Wesentlichen parallelen Achse auf einen geringen oder Nullwert begrenzt.

9. Sammelvorrichtung nach Anspruch 8, ***dadurch gekennzeichnet*, dass** das Ruhigstellungsmittel (25) von einem mit dem Abschnitt (18a, 18b) fest verbundenen Zapfen (26) gebildet ist, der in ein in den Innenring (12) eingearbeitetes Loch (27a) eingreift.

10. Sammelvorrichtung nach Anspruch 8, ***dadurch gekennzeichnet*, dass** das Ruhigstellungsmittel (25) von einem Vorsteckstift (28) gebildet ist, der den Abschnitt (18a, 18b) durchquert und der in ein in den Innenring (12) eingearbeitetes Loch (27b) eingreift.

11. Sammelvorrichtung nach irgend einem der Ansprüche 1 bis 10, ***dadurch gekennzeichnet,* dass** mindestens das zweite Lager (B) einen Innenring (12) umfasst, dass der Innenring (12) im Verhältnis zum Außenring (10) um die Drehachse (9) schwenken kann und dass der Innenring (12) mit dem Stützarm (6) fest verbunden ist.

12. Sammelvorrichtung nach Anspruch 11, ***dadurch gekennzeichnet,* dass** der Innenring (12) sich in einer zur Drehachse (9) im Wesentlichen parallelen Richtung frei im Außenring (10) verlagern kann.

13. Sammelvorrichtung nach irgend einem der Ansprüche 1 bis 12, ***dadurch gekennzeichnet,* dass** mindestens ein des mindestens ersten Lagers (A) und zweiten Lagers (B) zwei Dichtungen (29) aufweist und, dass sich jede der zwei Dichtungen (29) auf dem Außenring (10) des mindestens ersten Lagers (A) oder zweiten Lagers (B) abstützt.

14. Sammelvorrichtung nach Anspruch 13, ***dadurch gekennzeichnet,* dass** sich jede der zwei Dichtungen (29) auf dem Innenring (12) des mindestens ersten Lagers (A) oder zweiten Lagers (B) abstützt.

15. Sammelvorrichtung nach irgend einem der Ansprüche 1 bis 14, ***dadurch gekennzeichnet,* dass** der Außenring (10) von mindestens einem des mindestens ersten Lagers (A) und zweiten Lagers (B) zwei Teile (30a, 31a) aufweist, die sich im Wesentlichen in einer zur Drehachse (9) senkrechten Ebene treffen.

16. Sammelvorrichtung nach irgend einem der Ansprüche 1 bis 14, ***dadurch gekennzeichnet,* dass** der Außenring (10) von mindestens einem des mindestens ersten Lagers (A) und zweiten Lagers (B) zwei Teile (30b, 31 b) aufweist, die sich im Wesentlichen in einer zur Drehachse (9) parallelen Ebene treffen.

17. Sammelvorrichtung nach irgend einem der Ansprüche 1 bis 16, ***dadurch gekennzeichnet,* dass** der Außenring (10) von mindestens einem des mindestens ersten Lagers (A) und zweiten Lagers (B) aus selbstschmierendem Material hergestellt ist.

18. Sammelvorrichtung nach irgend einem der Ansprüche 1 bis 17, ***dadurch gekennzeichnet,* dass** der Innenring (12) von mindestens einem des mindestens ersten Lagers (A) und zweiten Lagers (B) ein auf dem Stützarm (6) angebrachtes Teil ist.

19. Sammelvorrichtung nach irgend einem der Ansprüche 1 bis 18, ***dadurch gekennzeichnet,* dass** der Innenring (12) von mindestens einem des mindestens ersten Lagers (A) und zweiten Lagers (B) von einem Absatz (32) auf dem Stützarm (6) gebildet ist.

20. Landwirtschaftliche Maschine, ***dadurch gekennzeichnet*, dass** sie mindestens eine Sammelvorrichtung nach irgend einem der Ansprüche 1 bis 19 aufweist.

## Claims

1. Pick-up device comprising tools for raking and picking up products lying on the ground and which is intended to be mounted on an agricultural machine (33), the said pick-up device (1) comprising a rotating part (2) equipped with at least one support arm (6), the said raking and picking up tools being attached to the said at least one support arm (6), the said at least one support arm (6) being able to pivot about a rotation axis (9) with respect to the said rotating part (2) by means of at least a first bearing (A) and a second bearing (B), the said at least first and second bearings (A and B) each comprising an outer ring (10) rigidly fastened to the said rotating part (2) and with respect to which outer ring (10) the said support arm (6) is able to pivot about the said rotation axis (9), ***characterized in* that** at least the said first bearing (A) comprises an inner ring (12), that the said inner ring (12) can pivot about the said rotation axis (9) with respect to the said outer ring (10), that the said inner ring (12) is rigidly fastened to the said support arm (6), that a stop means (13) connects the said inner ring (12) to the said outer ring (10), and that the said stop means (13) limits the displacement of the said support arm (6) with respect to the said rotating part (2) in a direction substantially parallel to the said rotation axis (9) to a small or nil value.

2. Pick-up device according to claim 1, ***characterized in* that** the said inner ring extends between two faces (14, 15), that the said outer ring extends between two faces (16, 17), and that the said stop means (13) is arranged between the two closest faces of the said faces (14, 15, 16, 17) in a direction substantially parallel to the said rotation axis (9).

3. Pick-up device according to claim 1 or 2, ***characterized in* that** the said stop means (13) is made of a two-part segment (18a) comprising two parts (19, 20), and that each of the said parts (19, 20) engages on one hand in a groove (21 a) formed in the said inner ring (12) and on the other hand in a groove (22a) formed in the said outer ring (10).

4. Pick-up device according to claim 1 or 2, ***characterized in* that** the said stop means (13) is made of an open segment (18b) and that the said open segment (18b) engages on one hand in a groove (21 a) formed in the said inner ring (12) and on the other hand in a groove (22a) formed in the said outer ring (10).

5. Pick-up device according to claim 1 or 2, ***characterized in* that** the said stop means (13) is made of a pin (23a) rigidly fastened to the said inner ring (12), and that the said pin (23a) engages in a groove (22b) formed in the said outer ring (10).

6. Pick-up device according to claim 1 or 2, ***characterized in* that** the said stop means (13) is made of a pin (23b) rigidly fastened to the said outer ring (10), and that the said pin (23b) engages in a groove (21b) formed in the said inner ring (12).

7. Pick-up device according to claim 1 or 2, ***characterized in* that** the said stop means (13) is made of a shoulder (24) on the said inner ring (12) and that the said shoulder (24) engages in a groove (22c) formed in the said outer ring (10).

8. Pick-up device according to claim 3 or 4, ***characterized in* that** the said segment (18a, 18b) comprises an anti-rotation means (25) and that the said anti-rotation means (25) limits the pivoting backlash of the said segment (18a, 18b) about an axis substantially parallel to the said rotation axis (9) to a small or nil value.

9. Pick-up device according to claim 8, ***characterized in* that** the said anti-rotation means (25) is made of a teat (26) which is rigidly fastened to the said segment (18a, 18b) and engages in a hole (27a) made in the said inner ring (12).

10. Pick-up device according to claim 8, ***characterized in* that** the said anti-rotation means (25) is made of a pin (28) that passes through the said segment (18a, 18b) and engages in a hole (27b) made in the said inner ring (12).

11. Pick-up device according to any one of claims 1 to 10, ***characterized in* that** at least the said second bearing (B) comprises an inner ring (12), that the said inner ring (12) can pivot with respect to the said outer ring (10) about the said rotation axis (9), and that the said inner ring (12) is rigidly fastened to the said support arm (6).

12. Pick-up device according to claim 11, ***characterized in* that** the said inner ring (12) can freely move in the said outer ring (10) in a direction substantially parallel to the said rotation axis (9).

13. Pick-up device according to any one of claims 1 to 12, ***characterized in* that** at least one of the said at least first bearing (A) and second bearing (B) comprises two seals (29), and that each of the said two seals (29) rests against the said outer ring (10) of the said at least first bearing (A) or second bearing (B).

14. Pick-up device according to claim 13, ***characterized in* that** each of the said two seals (29) rests against the said inner ring (12) of the said at least first bearing (A) or second bearing (B).

15. Pick-up device according to any one of claims 1 to 14, ***characterized in* that** the said outer ring (10) of at least one of the said at least first bearing (A) and second bearing (B) comprises two sections (30a, 31 a) that meet in a plane substantially perpendicular to the said rotation axis (9).

16. Pick-up device according to any one of claims 1 to 14, ***characterized in* that** the said outer ring (10) of at least one of the said at least first bearing (A) and second bearing (B) comprises two sections (30b, 31b) that meet in a plane substantially parallel to the said rotation axis (9).

17. Pick-up device according to any one of claims 1 to 16, ***characterized in* that** the said outer ring (10) of at least one of the said at least first bearing (A) and second bearing (B) is made from a self-lubricating material.

18. Pick-up device according to any one of claims 1 to 17, ***characterized in* that** the said inner ring (12) of at least one of the said at least first bearing (A) and second bearing (B) is a part attached to the said support arm (6).

19. Pick-up device according to any one of claims 1 to 18, ***characterized in* that** the said inner ring (12) of at least one of the said at least first bearing (1) and second bearing (B) is made of a shoulder (32) on the said support arm (6).

20. Agricultural machine ***characterized in* that** it comprises at least one pick-up device according to any one of claims 1 to 19.
